(19) Europäisches Patentamt
European Patent Office
Office européen des brevets

(11) **EP 1 229 038 A1**

(12) **EUROPÄISCHE PATENTANMELDUNG**

(43) Veröffentlichungstag:
**07.08.2002 Patentblatt 2002/32**

(51) Int Cl.[7]: **C07F 5/02**, H01G 9/02, H01M 10/40

(21) Anmeldenummer: **01130618.0**

(22) Anmeldetag: **27.12.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.01.2001 DE 10103189**

(71) Anmelder: **MERCK PATENT GmbH**
**64293 Darmstadt (DE)**

(72) Erfinder:
- **Schmidt, Michael, Dr.**
  **64342 Seeheim-Jugenheim (DE)**
- **Kühner, Andreas, Dr.**
  **64289 Darmstadt (DE)**
- **Franz, Klaus-Dieter, Dr.**
  **65779 Kelkheim (DE)**
- **Röschenthaler, Gerd, Dr. Prof.**
  **28357 Bremen (DE)**
- **Bissky, German**
  **28213 Bremen (DE)**
- **Kolomeitsev, Alexander, Dr.**
  **Kiew 01133 (UA)**
- **Kadyrov, Alexander, Dr.**
  **Moskau 117813 (RU)**

(54) **Boratsalze zur Anwendung in elektrochemischen Zellen**

(57) Die Erfindung betrifft Boratsalze und deren Anwendung in elektrochemischen Zellen.

EP 1 229 038 A1

## Beschreibung

Die Erfindung betrifft Boratsalze, Verfahren zu deren Herstellung und deren Anwendung in elektrochemischen Zellen.

Lithium-Ionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.

Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalation und Insertions-Verbindungen verwendet. Anoden können aus Lithium-Metall, Kohlenstoffen, Graphit, graphitischen Kohlenstoffen oder anderen Lithium-Interkalation und Insertions-Verbindungen oder Legierungsverbindungen bestehen. Als Elektrolyt werden Lösungen mit Lithiumsalzen wie $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

Die gängigen Lithiumleitsalze lassen verschiedene Nachteile erkennen. Einige Leitsalze weisen geringe Zyklisierausbeuten auf (z.B. $LiBF_4$). Andere Leitsalze verfügen über eine geringe thermische Stabilität (z.B. $LiPF_6$), und wieder andere Leitsalze sind wegen ihrer Giftigkeit und geringen Umweltverträglichkeit (z.B. $LiAsF_6$) nicht besonders geeignet.

$LiBF_4$ würde eine höhere thermische Stabilität als $LiPF_6$ aufweisen. Jedoch bildet es in aprotischen Lösungsmitteln Elektrolyte mit sehr geringer ionischer Leitfähigkeit und ist damit für Hochenergiebatterien weniger geeignet.

Zur Vermeidung dieser Nachteile wurden alternative Lithiumsalze vorgeschlagen.

Beispielsweise werden Imide, insbesondere Bis(trifluormethylsulfonyl)imid gemäß US 45054997; Methanide, insbesondere Tris(trifluormethylsulfonyl)methanid gemäß US 5273840 vorgeschlagen. Diese Salze besitzen eine hohe anodische Stabilität und können in organischen aprotischen Lösungsmitteln Lösungen mit hoher Leitfähigkeit bilden.

Jedoch wird Aluminium, das üblicherweise als kathodischer Stromableiter eingesetzt wird, zumindest von Imiden in nicht ausreichendem Maße passiviert (*L. A. Dominey,* Current State of Art on Lithium Battery Electrolyte in G. Pistoia (Hrsg.) Lithium Batteries, Amsterdam, Elsevier, 1994)

Methanide hingegen lassen sich nur mit sehr großem Aufwand herstellen und reinigen. Zudem hängen die elektrochemischen Eigenschaften wie Oxidationsstabilität und Passivierung von Aluminium sehr stark von der Reinheit des Methanids ab (WO 99/07676).

Als weitere Alternativen wurden in EP 0698301 Lithiumspiroborate bzw. gemäß Electrochemical and Solid State Letters, 2(2) 60-62 (1999) Lithiumspirophosphate vorgeschlagen. Aufgrund der Verwendung von zweizähnigen Liganden, besitzen diese Salze hohe thermische Zersetzungspunkte von teilweise über 200°C. Mit Oxidationspotentialen von maximal 4,3V gegen $Li/Li^+$ ist die elektrochemische Stabilität jedoch nicht ausreichend für den Einsatz in Lithiumbatterien mit hochoxidierenden Elektrodenmaterialien, wie z.B. $LiMn_2O_4$ oder $LiCo_{1-x}Ni_xO_2$ ($0<x<1$).

EP 929558 lehrt die Verwendung von Lithiumfluoralkylphosphaten mit vorzugsweise perfluorierten Ethyl- oder Isopropylgruppen. Die thermische Stabilität, wie auch die Hydrolysebeständigkeit dieser Lithiumsalze ist im Vergleich zu $LiPF_6$ deutlich erhöht.

Gegenstand der vorliegenden Erfindung ist es, Salze für Elektrolyte, zur Anwendung in elektrochemischen Zellen mit hoher Leitfähigkeit zur Verfügung zu stellen, die elektrochemisch stabil sind.

Die erfindungsgemäße Aufgabe wird gelöst durch Boratsalze der allgemeinen Formel

$$M^{n+}\ [BF_x(C_yF_{2y+1-z}H_z)_{4-x}]_n^- \qquad (I)$$

worin bedeuten:

$1<x<3$, $1<y<8$ und $0 \le z \le 2y+1$ und

M ein- bis dreiwertiges Kation ($1 \le n \le 3$), außer Kalium und Barium,

insbesondere:

Li,

$NR^1R^2R^3R^4$, $PR^5R^6R^7R^8$, $P(NR^5R^6)_kR^7{}_mR^8{}_{4-k-m}$ (mit k=1-4, m=0-3 und $k+m \le 4$) oder

$C(NR^5R^6)(NR^7R^8)(NR^9R^{10})$, wobei

$R^1$ bis $R^4$ $C_yF_{2y+1-z}H_z$ und

$R^5$ bis $R^{10}$ H oder

$$C_yF_{2y+1-z}H_z \text{ oder}$$

ein aromatisches heterozyklisches Kation, insbesondere Stickstoff- und/oder Sauerstoff- und/oder Schwefelhaltige aromatische heterozyklische Kationen.

Gegenstand der Erfindung sind Verfahren zur Herstellung dieser Verbindungen und deren Verwendung in Elektrolyten für elektrochemische Zellen, Batterien, Doppelschicht- und Superkondensatoren.

Es wurde gefunden, daß durch die unsymmetrische Struktur der Anionen, die Löslichkeit der erfindungsgemäßen Salze in aprotischen Lösungsmitteln deutlich höher als die von $LiBF_4$. $Li[BF_3(CF_3)]$ und $Li[BF_3(CH_3)]$ ist z.B. in reinem Diethylencarbonat eine Löslichkeit deutlich über 2,5 mol/l.

Überraschend wurde gefunden, daß in typischen Lösungsmittelmischungen für elektrochemische Zellen, wie z.B. EC/DEC, die erfindungsgemäßen Salze deutlich höhere Leitfähigkeiten im Vergleich zu $LiBF_4$ aufweisen. Es wurden für $Li[BF_3(CF_3)]$ in EC/DEC Leitfähigkeitswerte nahe an denen des $LiPF_6$ gefunden.

Außerdem wurde gefunden, daß die Salze eine sehr gute Hydrolysestabilität aufweisen. So gelingt zum Beispiel die Synthese von $Li[BF_3(CF_3)]$ aus wässrigem Medium.

Zudem zeigen die erfindungsgemäßen Salze eine elektrochemische Stabilität vergleichbar mit der des $LiPF_6$.

Damit sind die erfindungsgemäß hergestellten Boratsalze besonders für die Verwendung in elektrochemischen Zellen geeignet. Die Boratsalze können mit anderen Lithiumsalzen oder auch mit Boratkomplexen in Elektrolyten für sekundäre Lithiumbatterien verwendet werden.

Die Boratsalze können auch in Elektrolyten mit herkömmlichen Leitsalzen verwendet werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,
m und p 0, 1, 2, 3 oder 4 mit m+p=4 und
$R^1$ und $R^2$ gleich oder verschieden sind,
gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann,
haben und

Hal F, Cl oder Br
und A Alkyl mit 1 bis 6 C-Atomen, das ein- bis dreifach halogeniert sein kann, bedeuten. Ebenso geeignet sind Alkalialkoholate der allgemeinen Formel

$$Li^+ OR^-$$

sind, worin R
die Bedeutung eines aromatischen oder aliphatischen Carbon-, Dicarbon- oder Sulfonsäurerestes hat, oder
die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder

die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann, hat und

Hal F, Cl, oder Br,
und
A Alkyl mit 1 bis 6 C-Atomen, das ein- bis dreifach halogeniert sein kann.

Ebenso können die Elektrolyte Verbindungen der folgenden Formel (DE 199 41 566)

$$[([R^1(CR^2R^3)_k]_lA_x)_yKt]^{+}\ {}^{-}N(CF_3)_2$$

wobei

Kt= N, P, As, Sb, S, Se
A= N, P, P(O), O, S, S(O), $SO_2$, As, As(O), Sb, Sb(O)

$R^1$, $R^2$ und $R^3$ gleich oder verschieden
H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
A kann in verschiedenen Stellungen in $R^1$, $R^2$ und/oder $R^3$ eingeschlossen sein,
Kt kann in cyclischen oder heterocyclischen Ring eingeschlossen sein,
die an Kt gebundenen Gruppen können gleich oder verschieden sein mit

n= 1-18
m= 3-7
k= 0, 1-6
l= 1 oder 2 im Fall von x=1 und 1 im Fall x=0
x= 0,1
y= 1-4

bedeuten, enthalten. Das Verfahren zur Herstellung dieser Verbindungen ist dadurch gekennzeichnet, daß ein Alkalisalz der allgemeinen Formel

$$D^{+}\ {}^{-}N(CF_3)_2 \qquad (II)$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E \qquad (III)$$

wobei

Kt, A, $R^1$, $R^2$, $R^3$, k, l, x und y die oben angegebene Bedeutung haben und
$^-E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.
Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9, |

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{X+}[EZ]^{y-}_{x/y}$$

worin bedeuten:

| | |
|---|---|
| x,y | 1,2,3,4,5,6 |
| $M^{X+}$ | ein Metallion |
| E | eine Lewis-Säure, ausgewählt aus der Gruppe |

$BR^1R^2R^3$, $AlR^1R^2R^3$, $PR^1R^2R^3R^4R^5$, $AsR^1R^2R^3R^4R^5$, $VR^1R^2R^3R^4R^5$,
$R^1$ bis $R^5$ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und
Z $OR^6$, $NR^6R^7$, $CR^6R^7R^8$, $OSO_2R^6$, $N(SO_2R^6)(SO_2R^7)$,
$C(SO_2R^6)(SO_2R^7)(SO_2R^8)$, $OCOR^6$, wobei
$R^6$ bis $R^8$ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

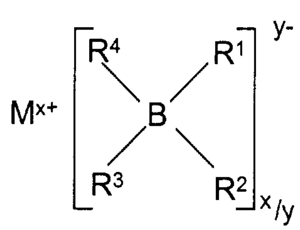

worin bedeuten:

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Die Additive können auch in Elektrolyte eingesetzt werden, die Lithiumfluoralkylphosphate der allgemeinen Formel (I) enthalten,

$$Li^+[PF_x(C_yF_{2y+1-z}H_z)_{6-x}]^- \quad (I)$$

worin

$$1 \leq x \leq 5$$

$$3 \leq y \leq 8$$

$$0 \leq z \leq 2y + 1$$

bedeuten und die Liganden ($C_yF_{2y+1-z}H_z$) gleich oder verschieden sein können, wobei die Verbindungen der allgemeinen Formel (I'),

$$Li^+[PF_a(CH_bF_c(CF_3)_d)_e]^- \quad (I')$$

in der a eine ganze Zahl von 2 bis 5, b = 0 oder 1, c = 0 oder 1, d = 2 und e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten der allgemeinen Formel (I) ist dadurch gekennzeichnet, daß wenigstens eine Verbindung der allgemeinen Formel

$$H_mP(C_nH_{2n+1})_{3-m} \quad (III),$$

$$OP(C_nH_{2n+1})_3 \quad (IV),$$

$$Cl_mP(C_nH_{2n+1})_{3-m} \quad (V),$$

$$F_mP(C_nH_{2n+1})_{3-m} \quad (VI),$$

$$Cl_oP(C_nH_{2n+1})_{5-o} \quad (VII),$$

$$F_oP(C_nH_{2n+1})_{5-o} \quad (VIII),$$

in denen jeweils
$0 \leq m \leq 2$, $3 \leq n \leq 8$ und $0 \leq o \leq 4$ bedeutet,
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz der allgemeinen Formel (I) nach den üblichen Methoden gereinigt und isoliert wird.

Die Additive können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. -oxihydroxide in das entsprechende Oxid übergeführt werden.

Die Additive können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Additive in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Nachfolgend wird ein allgemeines Beispiel der Erfindung näher erläutert.

Ein $BF_3$-Lösungsmittelkomplex wird 1:1 mit einem Alkyllithium bei Temperaturen unter 0°C umgesetzt. Das Gemisch wird langsam auf Raumtemperatur erwärmt. Ein Teil des Lösungsmittels wird entfernt und der Feststoff abfiltriert. Der Feststoff wird in herkömmlicher Weise aufgereinigt.

Ein weiteres Verfahren zur Herstellung der erfindungsgemäßen Salze geht von Lithiumsalzen aus, die in einem geeigneten Lösungsmittel 1:1 mit aus der Literatur bekannten $[B(CF_3)F_3]^-$-Salzen (Lit:Chambers, J. Am. Soc., 82, 5298 (1960)) umgesetzt werden. Das Gemisch wird bei erhöhter Temperatur gerührt und anschließend filtriert. Das Reaktionsgemisch wird mit aprotischen nichtwäßrigen Lösungsmitteln, vorzugsweise mit Lösungsmitteln, die in elektrochemischen Zellen verwendet werden, versetzt und getrocknet.

Außerdem kann das erfindungsgemäße Boratsalz gewonnen werden, indem das aus der Literatur bekannte $[B(CF_3)F_3]^-$-Salz (Chambers, J.Am.Soc, 82, 5298) 1:1 bis 1:1,5 mit Lithiumsalzen umgesetzt und in Wasser bei erhöhter Temperatur gerührt werden. Das Reaktionsgemisch wird 0,5 bis 2 Stunden am Siedepunkt erhitzt, das Wasser entfernt und anschließend mit geeigneten Lösungsmitteln, bevorzugt Lösungsmittel die in elektrochemischen Zellen eingesetzt werden, versetzt und getrocknet.

Die nachfolgenden Beispiele sollen die Erfindung näher erläutern, ohne sie jedoch zu beschränken.

<u>Beispiele</u>

Beispiel 1:

Lithium Methyltrifluorborat

Bei -10°C wurden zu 1.0 g (7.1 mmol) Bortrifluorid-Etherat in 5 ml Diethylether 3.1 g 5 %-ge Diethylether-Lösung von MeLi (7.1 mmol MeLi) langsam hinzugetropft und das Reaktionsgemisch unter Rühren innerhalb von 2h auf Raumtemperatur erwärmt. Das Lösungsmittel wurde bis auf die Hälfte abgezogen, der weiße Feststoff abfiltriert und mit 1 ml Ether gewaschen. Die Reste des Ethers wurden im Vakuum abgezogen. Ausbeute: 0.5 g (85 %). ($^{19}$F NMR: -154.7 (m); $^{1}$H NMR: -1.48 (s))

$$MeLi + BF_3OEt_2 \xrightarrow{Et_2O} Li^+ [MeBF_3]^-$$

Beispiel 2:

Lithium Trifluormethyltrifluorborat

In 100 ml Wasser wurden zu 1.84 g (0.071 mol) Lithiumfluorid 21.27 g (0.071 mol) Trimethylstannonium Trifluormethyltrifluorborat gegeben. Das Gemisch wurde bei 60°C über 12 Stunden gerührt, dann das schwerlösliche Trimethylfluorstannan abfiltriert, das Wasser bis auf 80% abgezogen und die Reste des Trimethylfluorstannans abfiltriert. (10.2 g $Li^+[B(CF_3)F_3]^-$ wurden erwartet). Danach wurde Wasser so lange abgepumpt bis die Lösung dickflüssig wurde.

$$Me_3Sn^+ [B(CF_3)F_3]^- \xrightarrow[H_2O \\ -FSnMe_3]{+ LiF} Li^+ [B(CF_3)F_3]^-$$

Das viskose, wasserhaltige Reaktionsgemisch (verunreinigt mit 15% $LiBF_4$) wird in 50 ml Diethylcarbonat gelöst, mit Magnesiumsulfat getrocknet, nach dem Abfiltrieren mit 100 ml $CCl_4$ versetzt und gerührt. Das ausgefallene $LiBF_4$ wird abfiltriert und die Lösung $^{19}$F-NMRspektroskopisch auf $BF_4^-$ kontrolliert. Der Gehalt des Salzes mit einer fluorhaltigen flüchtigen Referenz ($CF_3$-*cyclo*-$C_6F_{11}$) kontrolliert und das $CCl_4$ vollständig im Vakuum (15 Torr) abgezogen. Das zusammen mit $CCl_4$ entfernte Diethylcarbonat wird ergänzt. Anschließend wird die Lösung durch weiteres Abpumpen von Diethylcarbonat auf die gewünschte Konzentration gebracht.

$^{19}$F-NMR: -76.0 (q, $^3J_{BF}$ = 33.6 Hz); -156.0 (q, $^1J_{BF}$= 40.7 Hz). Daten von Anionen entsprechen denen aus Lit. [1, 2].

Beispiel 3:

Tetraethylammonium Trifluormethyltrifluorborat

Lithium Trifluormethyltrifluorborat wird in Acetonitril bei Raumtemperatur mit Tetraethylammoniumchlorid zu Tetraethylammonium Trifluormethyltrifluorborat umgesetzt. Das entstandene Lithiumchlorid wird abfiltriert und das Produkt aus Acetonitril/Methyl-tert. butylether umkristallisiert.

$^{19}$F-NMR-Daten des Anions entsprechen denen aus Beispiel 2

Beispiel 4:

Tetraethylphosphonium Trifluormethyltrifluorborat

Lithium Trifluormethyltrifluorborat wird in Acetonitril bei Raumtemperatur mit Tetraethylphosphoniumchlorid zu Tetraethylphosphonium Trifluormethyltrifluorborat umgesetzt. Das entstandene Lithiumchlorid wird abfiltriert und das Produkt aus Acetonitril/Methyl-tert. butylether umkristallisiert.

$^{19}$F-NMR-Daten des Anions entsprechen denen aus Beispiel 2

Beispiel 5:

Herstellung über $Bu_3Sn[BF_3CF_3]$

Zu 1.1 g (3.1 mmol) Trifluoromethyltri-n-butylstannan und 4 ml Tetrachlorkohlenstoff wurden 3.2 mmol (0.22 g) Bortrifluorid bei -196°C kondensiert. Innerhalb 10 min wurde auf Raumtemperatur erwärmt. Nach dem Abpumpen des Lösungsmittels verbleiben 1.3 g hochviskoses $Bu_3Sn^+[BF_3CF_3]^-$.

Beispiel 6:

Lithium Trifluormethyltrifluorborat aus $Bu_3Sn^+[BF_3CF_3]^-$ und LiF

In einen Rundkolben, der mit einem Magnetrührer ausgerüstet ist, wurden 1.3 g (3.1 mmol) $Bu_3Sn^+[BF_3CF_3]^-$, 0.08 g (3.1 mmol) LiF und 30 ml heißes Wasser gegeben. Das Gemisch wurde innerhalb 12 Stunden gerührt, danach wurde es für 1h zum Sieden erhitzt. Das ausgefallene Fluortributylstannan wurde abfiltriert. Von der verbleibenden Lösung zieht man das Wasser so lange ab, bis die Lösung dickflüssig wird. Zur weiteren Isolierung von $Li^+[B(CF_3)F_3]^-$ siehe oben.

$^{19}F$-NMR-Daten des Anions entsprechen denen aus Beispiel 2

$^{19}F$-NMR [2]: -76.0 (q, $^3J_{BF}$ = 33.6 Hz); -156.0 (q, $^1J_{BF}$= 40.7 Hz). Daten von Anionen entsprechen denen aus Lit. [1, 2].

Beispiel 7:

Lithium Bis(Trifluormethyl)difluorborat

Zu 78.0 g (182.7 mmol) $Bu_3Sn^+[BF_3CF_3]^-$ und 7.1 g (274.1 mmol) LiF wurden 600 ml heißes Wasser gegeben, für 12 h gerührt und danach wurde für 1 h zum Sieden erhitzt. Das ausgefallene Fluortributylstannan wurde abfiltriert und dann das Wasser so lange abgezogen, bis die Lösung dickflüssig ist.

Danach wird 150 ml Diethylcarbonat zur dickflüssigen Lösung gegeben. Wasser wird von der Lösung im Hochvakuum abgezogen (in diesem Fall koordiniert Diethylcarbonat viel besser an Lithium als Wasser, darum kann Wasser zuerst entfernt werden). Man erhält ein Gemisch aus $Li^+BF_4^-$, $Li^+[BF_3CF_3]^-$, $Li^+[BF_2(CF_3)_2]^-$ Die Lösung wird mehrmals mit 4×30ml Wasser extrahiert und $^{19}F$-NMRspektroskopisch kontrolliert (in der wässrigen Phase befinden sich $Li^+BF_4^-$ und $Li^+[BF_3CF_3]^-$). Die Diethylcarbonatlösung wird mit Magnesiumsulfat getrocknet, abfiltriert, danach mit 0.2 g Lithiumcarbonat versetzt (um vorhandene HF zu neutralisieren) und wieder abfiltriert ($LiCO_3$ und LiF sind praktisch unlöslich in Diethylcarbonat). Der pH-Wert wird mit Indikatorpapier kontrolliert. Das Gehalt des Salzes wird durch Integration mit 1,1-Bis(trifluormethyl)-perfluorcyclohexan (Sdp. 120°C) festgestellt. Im letzten Schritt entfernt man das1,1-Bis(trifluormethyl)-perfluorcyclohexan aus der Lösung im Hochvakuum. Man kommt so zu einer Lösung von 6.7 g Lithium Bis(trifluormethyl)-difluorborat in 22.8 g Diethylcarbonat.

$^{19}F$-NMR-Daten des Anions entsprechen denen aus [2]

Beispiel 8:

Tetraethylammonium Bis(Trifluormethyl)difluorborat

Lithium Bis(Trifluormethyl)difluorborat wird in Acetonitril bei Raumtemperatur mit Tetraethylammoniumchlorid zu Tetraethylammonium Bis(Trifluormethyl)difluorborat umgesetzt. Das entstandene Lithiumchlorid wird abfiltriert und das Produkt aus Acetonitril/Methyl-tert. butylether umkristallisiert.

$^{19}F$-NMR-Daten des Anions entsprechen denen aus [2]

Beispiel 9:

Leitfähigkeitsuntersuchungen

Tabelle I:

| Spezifische ionische Leitfähigkeiten in EC: DMC (50:50 wt%) (T=25°C) | | | | | |
|---|---|---|---|---|---|
| Konzentration [mol/dm$^3$] | Leitfähigkeit [mS cm$^{-1}$] | | | | |
| | $Li[BF_3(CF_3)]$ | $Li[BF_2(CF_3)_2]$ | $Li[BF_3(CH_3)]$ | $LiBF_4$ | $LiPF_6$ |
| 0,5 | 5,9 | | | | 6,4 |
| 0,75 | 6,5 | 7,2 | 3,3 | | |
| 1 | 6,1 | | 3,4 | 3,1 | 7,0 |
| 1,25 | 5,4 | | 3,3 | | 6,4 |

Beispiel 10:

Elektrochemische Stabilität

In einer Messzelle mit Platinarbeitselektrode, Lithiumgegenelektrode und Lithiumreferenzelektrode wurden jeweils 3 Zyklovoltammogramme hintereinander aufgenommen. Hierzu wurde ausgehend vom Ruhepotential das Potential zuerst mit einer Vorschubgeschwindigkeit von 10 mV/s auf 6,0 V gegen $Li/Li^+$ erhöht und im weiteren Verlauf zurück auf das Ruhepotential gefahren.
Als Elektrolyte wurden 0,5 molare Lösungen von $Li[BF_3CH_3]$ und $Li[BF_3CF_3]$ in EC/DEC (50:50 wt%) verwendet. Abbildung 1 zeigt die jeweils ersten Halbzyklen der Zyklovoltammogramme.

## Patentansprüche

**1.** Boratsalze der allgemeinen Formel

$$M^{n+}\ [BF_x(C_yF_{2y+1-z}H_z)_{4-x}]_n^- \qquad (I)$$

worin bedeuten:
$1<x<3$, $1 \leq y \leq 8$ und $0 \leq z \leq 2y+1$ und

M ein- bis dreiwertiges Kation ($1 \leq n \leq 3$), außer Kalium und Barium,

insbesondere:

Li,

$NR^1R^2R^3R^4$, $PR^5R^6R^7R^8$, $P(NR^5R^6)_kR^7_mR^8_{4-k-m}$ (mit k=1-4, m=0-3 und $k+m \leq 4$) oder

$C(NR^5R^6)(NR^7R^8)(NR^9R^{10})$, wobei

$R^1$ bis $R^4$ $C_yF_{2y+1-z}H_z$ und

$R^5$ bis $R^{10}$ H oder

$$C_yF_{2y+1-z}H_z \text{ oder}$$

ein aromatisches heterozyklisches Kation, insbesondere Stickstoff- und/oder Sauerstoff- und/oder Schwefelhaltige

aromatische heterozyklische Kationen.

**2.** Verfahren zur Herstellung von Verbindungen der allgemeinen Formel (I), **dadurch gekennzeichnet, daß**

a) $BF_3$-Lösungsmittel-Komplexe 1:1 mit Alkyllithium unter Kühlung umgesetzt werden, nach langsamer Erwärmung das Lösungsmittel zu einem Großteil entfernt und anschließend der Feststoff abfiltriert und mit einem geeigneten Lösungsmittel gewaschen wird, oder

b) Lithiumsalze in einem geeigneten Lösungsmittel 1:1 mit $B(CF_3)F_3$-salzen umgesetzt werden, bei erhöhter Temperatur gerührt und nach Entfernen des Lösungsmittels das Reaktionsgemisch mit aprotischen nichtwäßrigen Lösungsmitteln, vorzugsweise mit Lösungsmitteln die in elektrochemischen Zellen verwendet werden, versetzt und getrocknet wird, oder

c) $B(CF_3)F_3$-salze 1:1 bis 1:1,5 mit Lithiumsalzen in Wasser bei erhöhter Temperatur umgesetzt und 0,5 bis 2 Stunden am Siedepunkt erhitzt werden, das Wasser entfernt und das Reaktionsgemisch mit aprotischen nichtwäßrigen Lösungsmitteln, vorzugsweise mit Lösungsmitteln die in elektrochemischen Zellen verwendet werden, versetzt getrocknet wird.

**3.** Elektrolyt, enthaltend mindestens eine Verbindung des Anspruchs 1.

**4.** Elektrolyt nach Anspruch 3, enthaltend mindestens noch ein anderes Leitsalz oder Additiv.

**5.** Elektrochemische Zelle, enthaltend einen Elektrolyten nach Anspruch 3 oder 4.

**6.** Batterie, Doppelschichtkondensator oder Superkondensator nach Anspruch 5.

**7.** Verwendung der Boratsalze gemäß Anspruch 1 zur Herstellung von Elektrolyten für elektrochemische Zellen, Batterien, Doppelschicht- bzw. Superkondensatoren.

Abb. 1

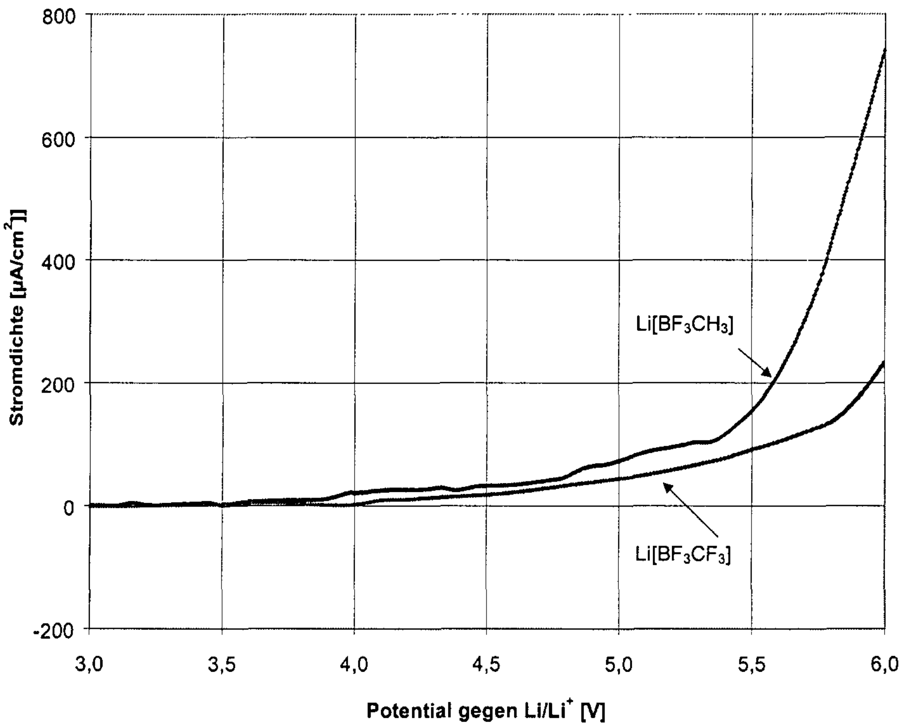
800
600
400
200
0
-200
Stromdichte [µA/cm²]]
3,0
3,5
4,0
4,5
5,0
5,5
6,0
Potential gegen Li/Li⁺ [V]
Li[BF3CH3]
Li[BF3CF3]

Europäisches Patentamt

# EUROPÄISCHER RECHERCHENBERICHT

Nummer der Anmeldung
EP 01 13 0618

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| E | EP 1 174 941 A (MATSUSHITA ELECTRIC IND CO LTD) 23. Januar 2002 (2002-01-23)<br>* das ganze Dokument *<br>--- | 1-7 | C07F5/02<br>H01G9/02<br>H01M10/40 |
| X | BRAUER, DAVID J. ET AL: "Halogenation of (CF3)3B.cntdot.NH3: N,N-Dihaloamino- and Halo-tris(trifluoromethyl)borates '(CF3)3B-NX2!- and '(CF3)3B-X!-, X = F, Cl, Br"<br>INORGANIC CHEMISTRY (6-9-1999), 38(18), 3972-3977 ,<br>XP002195532<br>ISSN: 0020-1669<br>* Seite 3974, Spalte 2, Zeile 40 *<br>--- | 1 | |
| X | PATENT ABSTRACTS OF JAPAN<br>vol. 014, no. 138 (P-1022),<br>15. März 1990 (1990-03-15)<br>-& JP 02 003052 A (CANON INC),<br>8. Januar 1990 (1990-01-08)<br>* das ganze Dokument *<br>--- | 1 | **RECHERCHIERTE SACHGEBIETE (Int.Cl.7)** |
| X | BRAUER, D. J. ET AL: "Vibrational spectra and normal coordinate analysis of CF3 compounds. XXXIV. The bis(trifluoromethyl)difluoroborate anion: x-ray structure of Cs'(CF3)2BF2!"<br>JOURNAL OF ORGANOMETALLIC CHEMISTRY (1980), 192(3), 305-17 ,<br>XP001068524<br>ISSN: 0022-328X<br>* das ganze Dokument *<br>---<br>-/-- | 1 | C07F<br>H01G<br>H01M |

Der vorliegende Recherchenbericht wurde für alle Patentansprüche erstellt

| Recherchenort | Abschlußdatum der Recherche | Prüfer |
|---|---|---|
| MÜNCHEN | 9. April 2002 | Elliott, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................
& : Mitglied der gleichen Patentfamilie,übereinstimmendes Dokument

EPO FORM 1503 03.82 (P04C03)

Europäisches Patentamt

# EUROPÄISCHER RECHERCHENBERICHT

Nummer der Anmeldung
EP 01 13 0618

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PAWELKE, G. ET AL: "The bis(trifluoromethyl) difluoroborate anion" JOURNAL OF ORGANOMETALLIC CHEMISTRY (1979), 178(1), 1-4 , XP000645199 ISSN: 0022-328X Gleichungen (1), (2), (3b) & (4); Seite 3, Zeile 7 --- | 1 | |
| X | BOOTH, M. R. ET AL: "Reactivity of metal-metal bonds. VI. Cleavage reactions of (trimethyltin)pentacarbonyl-manganese" JOURNAL OF ORGANOMETALLIC CHEMISTRY (1970), 21(1), 171-80 , XP001068526 ISSN: 0022-328X * Seite 179, Zeile 11 - Zeile 13 * --- | 1 | |
| X | CHAMBERS, R. D. ET AL: "Some salts of trifluoromethylfluoroboric acid" JOURNAL OF THE AMERICAN CHEMICAL SOCIETY (1960), 82, 5298-301, XP000645306 ISSN: 0002-7863 * das ganze Dokument * --- | 1 | RECHERCHIERTE SACHGEBIETE (Int.Cl.7) |
| X | CHAMBERS, R. D. ET AL: "The Trifluoromethylfluoroborate Anion" PROCEEDINGS OF THE CHEMICAL SOCIETY (1960), 114-5, XP001062040 * Seite 115, Spalte 1, Zeile 11 * --- -/-- | 1 | |

Der vorliegende Recherchenbericht wurde für alle Patentansprüche erstellt

| Recherchenort | Abschlußdatum der Recherche | Prüfer |
|---|---|---|
| MÜNCHEN | 9. April 2002 | Elliott, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 01 13 0618

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | FROHN, H.-J. ET AL: "A preparative method for perfluoroalkyltrifluoroborates and perfluoroalkyldifluoroboranes" ZEITSCHRIFT FUER ANORGANISCHE UND ALLGEMEINE CHEMIE (2001), 627(1), 15-16 , XP001068334 ISSN: 0044-2313 * das ganze Dokument * | 1 | |
| D,A | HANDA M ET AL: "NEW LITHIUM SALT WITH A CHELATE COMPLEX OF PHOSPHORUS FOR LITHIUM BATTERY ELECTROLYTES" ELECTROCHEMICAL AND SOLID-STATE LETTERS, IEEE SERVICE CENTER, PISCATAWAY, NJ, US, Bd. 2, Nr. 2, Februar 1999 (1999-02), Seiten 60-62, XP000864931 ISSN: 1099-0062 * das ganze Dokument * | 1-7 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 9. April 2002 | Elliott, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 01 13 0618

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 1174941 | A | 23-01-2002 | JP | 2002033121 A | 31-01-2002 |
| | | | CN | 1334615 A | 06-02-2002 |
| | | | EP | 1174941 A2 | 23-01-2002 |
| | | | WO | 0207248 A1 | 24-01-2002 |
| | | | US | 2002028389 A1 | 07-03-2002 |
| JP 02003052 | A | 08-01-1990 | KEINE | | |

EPO FORM P0461

Für nähere Einzelheiten zu diesem Anhang : siehe Amtsblatt des Europäischen Patentamts, Nr.12/82